# FASCICULE DE BREVET EUROPEEN

(11) **EP 3 084 583 B1**
(45) Date de publication et mention de la délivrance du brevet: **18.03.2020**
(21) Numéro de dépôt: 14827463.2
(22) Date de dépôt: 18.12.2014
(51) Int. Cl.: G06F 3/0488, G06F 3/01

(54) **DISPOSITIF DE COMMANDE PERMETTANT DE COMMANDER AU MOINS DEUX FONCTIONS D'UN VÉHICULE AUTOMOBILE**
STEUERUNGSVORRICHTUNG ZUR STEUERUNG WENIGSTENS ZWEIER FUNKTIONEN EINES KRAFTFAHRZEUGS
CONTROL DEVICE FOR CONTROLLING AT LEAST TWO FUNCTIONS OF A MOTOR VEHICLE

(30) Priorité: 19.12.2013 FR 1303005
(43) Date de publication de la demande: 26.10.2016
(73) Titulaire: DAV, 94046 Créteil Cedex (FR)
(72) Inventeur: AUBRY, Anthony, F-94046 Créteil Cedex (FR)
(74) Mandataire: Delplanque, Arnaud
(86) Numéro de dépôt international: PCT/FR2014/000293
(87) Numéro de publication internationale: WO 2015/092169

(56) Documents cités:
- EP-A1- 2 375 307
- EP-A2- 2 028 583
- EP-A2- 2 230 582
- WO-A1-2013/047364
- US-A1- 2004 204 129
- US-A1- 2011 175 832
- US-A1- 2013 063 364
- US-B2- 7 808 488

## Description

L'invention se rapporte à une interface homme machine permettant de commander au moins deux fonctions d'un véhicule automobile et à une planche de bord d'un véhicule automobile comprenant une interface homme machine selon l'invention.

De plus en plus de véhicule automobile sont équipés d'interfaces homme machine comprenant un pavé tactile et permettant de commander des fonctions dans le véhicule automobile. Le document EP 2 230 582 A2 divulgue une interface homme-machine pour un véhicule. Le document US 7 808 488 B2 décrit une interface homme-machine pouvant être implémentée dans un véhicule, comprenant des moyens de retour de force.

Ce type d'interface homme machine est facilement intégrable à un dispositif d'affichage, on parle alors d'écran tactile. Les pavés tactiles capacitifs sont particulièrement plébiscités de part leur grande réactivité et le confort d'utilisation pour l'utilisateur.

De plus, les interfaces homme machine comprenant un pavé tactile capacitif permettent la prise en compte d'une grande variété de type de commandes ; par exemple des commandes de type « appuyer » ou des commandes de type « glisser » ou « pincer ».

Le type de commande « appuyer » ou encore « push » en anglais correspond à l'appui par un moyen de commande d'au moins une partie de la zone de commande d'un pavé tactile.

Le type de commande « glisser » ou « pincer » soit « slide » ou « pinch » en anglais correspond à l'effleurement d'au moins une partie de la zone de commande d'un pavé tactile par un moyen de commande.

L'une des problématiques rencontrées par l'utilisation de ce type d'interface homme machine est de fournir un retour à l'utilisateur sur la prise en compte de sa commande. En effet, un certain nombre de commandes peuvent ne pas avoir un effet immédiat, par exemple le réglage de la température de l'habitacle. Il est cependant préférable de fournir un retour à l'utilisateur de la bonne prise en compte de sa commande. Ce retour à l'utilisateur sur la prise en compte de sa commande est généralement réalisé au moyen d'un effet haptique, par exemple une vibration.

Le niveau de sensibilité de ce type d'interface homme machine nécessite souvent un réglage assez fin. En pratique il s'agit de trouver un compromis permettant de prendre en compte les commandes des différents utilisateurs, et ce quelles que soient les caractéristiques les moyens de commandes utilisés, tout en limitant la sensibilité du pavé tactile afin de ne pas déclencher des commandes de manière non désirée.

L'une des principales problématiques de ce type d'interface homme machine réside dans la sensibilité de la détection d'une commande de l'utilisateur et dans l'effet haptique généré lors de la prise en compte de la commande.

Ainsi, il existe un besoin de fournir une interface homme machine qui soit adaptée aux différentes commandes de l'utilisateur.

A cet effet l'invention porte sur une interface homme machine permettant de commander au moins deux fonctions d'un véhicule automobile conformément à la revendication 1.

L'interface homme machine selon l'invention peut également comprendre une ou plusieurs des caractéristiques ci-dessous, considérées individuellement ou selon toutes les combinaisons techniquement possibles :
- le pavé tactile capacitif comprend un réseau d'électrodes chargées électriquement, et le signal représentatif d'une commande de l'utilisateur au niveau dudit pavé tactile est lié à la perturbation du champ électrostatique généré par le réseau d'électrodes lors d'une commande de l'utilisateur au niveau du pavé tactile ; et/ou
- l'amplitude du signal représentatif d'une commande de l'utilisateur au niveau dudit pavé tactile est proportionnelle à la capacitance mesurée entre chaque électrode du réseau d'électrodes et le moyen de commande de l'utilisateur lors d'une commande de l'utilisateur au niveau du pavé tactile ; et/ou
- le dispositif de contrôle est configuré pour déterminer pour au moins une des zones de commande du pavé tactile la fonction à activer lorsque le niveau du signal reçu est supérieur ou égal à la valeur seuil correspondant à ladite zone en fonction du nombre d'électrodes du réseau d'électrodes du pavé tactile capacitif dont le niveau du signal est supérieur ou égal à ladite valeur seuil ; et/ou
- le dispositif de retour haptique est configuré pour fournir un retour haptique différent en fonction du nombre d'électrodes du réseau d'électrodes du pavé tactile capacitif dont le niveau du signal est supérieur ou égal à ladite valeur seuil.

L'invention concerne également une planche de bord d'un véhicule automobile comprenant une interface homme machine selon l'invention.

L'invention sera mieux comprise à la lecture de la description qui va suivre donnée à titre d'exemple non limitatif de mise en œuvre de celle-ci, et à l'examen des dessins annexés sur lesquels :
- la figure 1 illustre une interface homme machine selon un mode de réalisation de l'invention;
- la figure 2 illustre un vue de côté d'un pavé tactile d'une interface homme machine selon un mode de réalisation de l'invention ; et
- la figure 3 illustre un réseau d'électrodes d'un pavé tactile d'une interface homme machine selon un mode de réalisation de l'invention.

L'invention concerne une interface homme machine permettant de commander au moins deux fonctions différentes d'un véhicule automobile.

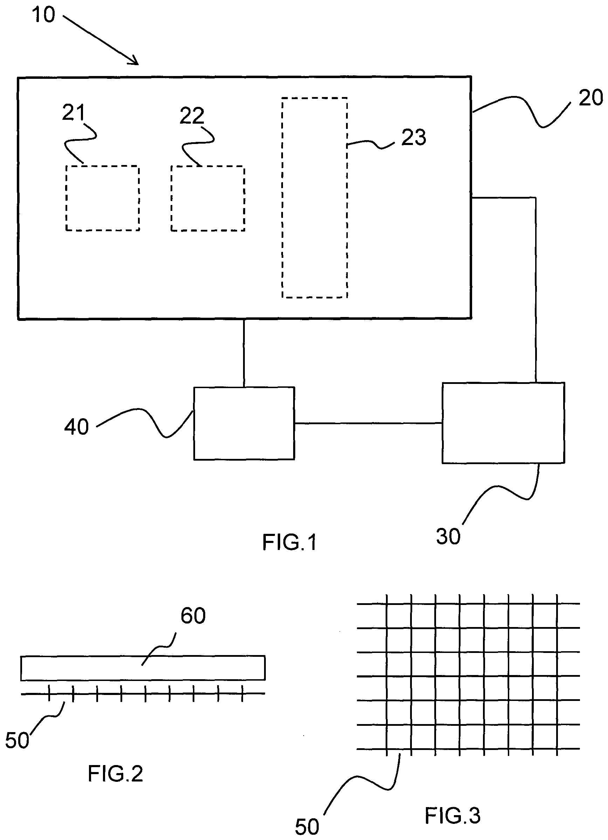

Comme représenté sur la figure 1, l'interface homme machine 10 selon l'invention comprend au moins :
- un pavé tactile 20,
- un dispositif de retour haptique 40, et
- un dispositif de contrôle 30.

Le pavé tactile 20 est de préférence de type capacitif. Comme représenté sur la figure 1, le pavé tactile 20 comprend une pluralité de zones de commande, par exemple trois zones de commande 21, 22 et 23. Chacune des zones de commande 21, 22, 23 est configurée pour recevoir au moins une commande correspondant à au moins une fonction d'un véhicule automobile.

Selon un mode de réalisation de l'invention, les différentes zones de commande 21, 22, 23 sont dédiées à un type de commande.

Par exemple, les zones de commande 21 et 22 peuvent être dédiées à des commandes de type « appuyer » ou encore « push » en anglais. Ce type de commande correspond à l'appui par un moyen de commande, par exemple un doigt ou éventuellement plusieurs, d'au moins une partie de la zone de commande du pavé tactile.

La zone de commande 23 peut être dédiée à des commandes de type « glisser » ou « pincer » soit « slide » ou « pinch » en anglais. Ce type de commande correspond à l'effleurement d'au moins une partie de la zone de commande du pavé tactile par un moyen de commande, par exemple un ou deux doigts de l'utilisateur.

Les inventeurs se sont aperçus que le niveau de sensibilité optimum de l'écran tactile capacitif est différent pour les différents types de commande. Ainsi, en prévoyant des zones de commande différentes et dédiées préférentiellement à un type de commande, il est possible d'optimiser la prise en compte des commandes de l'utilisateur.

Typiquement, l'interface homme machine selon l'invention présente une sensibilité plus faible dans les zones de commande correspondant à des commandes de type « glisser » ou « pincer » que dans les zones de commande correspondant à des commandes de type « appuyer ».

Optionnellement, le pavé tactile 20 est transparent est peut être disposé devant un dispositif d'affichage, comme une dalle TFT, LCM, LCD ou OLED.

Le dispositif de retour haptique 40 est configuré pour fournir un retour haptique à l'utilisateur de l'interface homme machine lors de la prise en compte de sa commande.

Le retour haptique peut être de différentes formes, par exemple un retour visuel, par exemple sous la forme de l'affichage d'une information, et/ou sonore, par exemple sous la forme d'un son émis à l'utilisateur, et/ou tactile, par exemple sous la forme d'une vibration renvoyée à l'utilisateur au niveau du pavé tactile.

Selon un mode de réalisation de l'invention, il est avantageux de prévoir des effets haptiques différents en fonction de la zone de commande du pavé tactile utilisée.

Cela permet de fournir à l'utilisateur un retour plus facilement identifiable à une fonction ou à un type de commande.

Par exemple, dans le cas d'un effet haptique vibratoire, il est possible de faire varier l'intensité et/ou les fréquences des vibrations en fonction de la zone de commande. Cela est particulièrement avantageux lorsque les zones de commande sont dédiées à des types de commandes. En effet, en fonction du type de commande, « appuyer », « glisser » ou « pincer », l'effet haptique le plus approprié n'est pas forcément le même.

Ainsi, selon ce mode de réalisation, l'interface homme machine selon l'invention permet non seulement d'adapter la sensibilité des différentes zone de commande mais également d'adapter le retour haptique correspondant.

Le dispositif de contrôle 30 de l'interface homme machine selon l'invention est configuré pour recevoir du pavé tactile un signal représentatif d'une commande de l'utilisateur au niveau du pavé tactile.

De plus, le dispositif de contrôle 30 permet de prendre en compte la commande de l'utilisateur lorsque le niveau du signal reçu est supérieur ou égal à une valeur seuil.

Dans l'interface homme machine selon l'invention, le dispositif de contrôle est configuré pour comprendre des valeurs seuils différentes pour au moins deux des zones de commande du pavé tactile.

Les valeurs seuils de chacune des zones déterminent les sensibilités des zones. Ainsi, le dispositif de contrôle 30 permet d'adapter les sensibilités des différentes zones de commande du pavé tactile.

En particulier, le dispositif de contrôle peut être configuré pour avoir une valeur seuil pour une zone de commande de type « glisser » ou « pincer » supérieure à la valeur seuil pour une zone de commande de type « appuyer ».

Typiquement, le signal reçu par le dispositif de contrôle correspond à des valeurs de capacitances mesurées au niveau d'un réseau d'électrodes disposées dans le pavé tactile 20.

Selon l'exemple des figures 2 et 3, le pavé tactile 20 comprend un réseau d'électrodes 50 chargées électriquement.

De préférence, le réseau d'électrodes est recouvert d'une plaque de verre 60 pour les protéger. Les électrodes peuvent être en IOT, oxyde d'indium-étain, afin d'assurer une transparence du pavé tactile.

Le signal représentatif d'une commande de l'utilisateur au niveau du pavé tactile est typiquement lié à la perturbation du champ électrostatique généré par le réseau d'électrodes lors d'une commande de l'utilisateur au niveau de l'écran tactile. En effet, lorsque l'utilisateur approche un moyen de commande, par exemple un doigt ou un stylet, du pavé tactile, il perturbe le champ électrostatique généré par les électrodes. Cette perturbation peut être mesurée et son amplitude comparée à une valeur seuil au niveau du dispositif de contrôle 30.

Selon un mode préféré de l'invention, l'amplitude du signal représentatif d'une commande de l'utilisateur au niveau dudit pavé tactile est proportionnelle à la capacitance mesurée entre chaque électrode du réseau d'électrodes et le moyen de commande de l'utilisateur, par exemple un doigt de l'utilisateur ou un stylet, lors d'une commande de l'utilisateur au niveau du pavé tactile.

Selon un mode de réalisation de l'invention, le dispositif de contrôle de l'interface homme machine est configuré pour déterminer pour au moins une des zones de commande du pavé tactile la fonction à activer en fonction du nombre d'électrodes du réseau d'électrodes du pavé tactile capacitif dont le niveau du signal est supérieur ou égal à une valeur seuil.

Avantageusement, la considération pour l'activation de la fonction du nombre d'électrodes du réseau d'électrodes du pavé tactile capacitif dont le niveau du signal est supérieur ou égal à une valeur seuil, offre une dimension supplémentaire à l'interface homme machine selon l'invention.

En particulier, il est possible de distinguer des commandes en fonction de la force d'appui du doigt de l'utilisateur. En effet, plus l'utilisateur appuie fort sur le pavé tactile, plus son doigt s'écrase sur le pavé tactile, et plus un nombre important d'électrodes du réseau d'électrodes du pavé tactile présente un signal supérieur ou égal à une valeur seuil.

Il est possible pour une zone de commande du pavé tactile de prévoir des valeurs seuils en terme de nombre d'électrodes. Typiquement si le nombre d'électrodes dont le signal est supérieur à un seuil de prise en compte correspond à une zone comprise entre 50 mm² et 75 mm², le dispositif de contrôle permet l'activation d'une première fonction, si le nombre d'électrodes dont le signal est supérieur audit seuil de prise en compte correspond à une zone comprise entre 75 mm² et 100 mm², le dispositif de contrôle permet l'activation d'une deuxième fonction, et si le nombre d'électrodes dont le signal est supérieur audit seuil de prise en compte correspond à une zone supérieure à 100 mm², le dispositif de contrôle permet l'activation d'une troisième fonction.

Selon un mode de réalisation préféré de l'invention, le dispositif de retour haptique est configuré pour fournir un retour haptique différent en fonction du nombre d'électrodes du réseau d'électrodes du pavé tactile capacitif dont le niveau du signal est supérieur ou égal à ladite valeur seuil.

Par exemple, l'intensité et la fréquence des vibrations perçues par l'utilisateur peuvent être différentes en fonction de la force d'appui de l'utilisateur sur le pavé tactile.

Avantageusement, cela permet de faire un retour haptique plus facilement compréhensible et identifiable par l'utilisateur.

Bien entendu, l'invention ne se limite pas aux modes de réalisation décrits et s'étend à d'autres variantes dans la portée des revendications.

Dans la présente, le mot «comprenant» n'exclut pas d'autres éléments, et l'article indéfini «un» ou «une» n'exclut pas une pluralité.

## Revendications

1. Interface homme machine (10) permettant de commander au moins deux fonctions d'un véhicule automobile, l'interface homme machine comprenant :
- un pavé tactile capacitif (20) comprenant au moins deux zones de commande (21, 22, 23), chaque zone de commande étant configurée pour recevoir une commande d'au moins une fonction,
- un dispositif de retour haptique (40) configuré pour fournir un retour à l'utilisateur de l'interface homme machine lors de la prise en compte de la commande,
- un dispositif de contrôle (30) configuré pour recevoir du pavé tactile un signal représentatif d'une commande de l'utilisateur au niveau dudit pavé tactile et pour prendre en compte ladite commande lorsque le niveau du signal reçu est supérieur ou égal à une valeur seuil,
le dispositif de contrôle étant configuré pour comprendre des valeurs seuils différentes pour au moins deux des zones de commande du pavé tactile et le dispositif de retour haptique étant configuré pour fournir un effet haptique différent en fonction de la zone de commande du pavé tactile utilisée par l'utilisateur et au moins une des deux zones de commande du pavé tactile étant une zone de commande de type « appuyer » configurée pour recevoir une commande de type «appuyer » et au moins une des deux zones de commande du pavé tactile étant une zone de commande de type « glisser » ou « pincer » configurée pour recevoir une commande de type « glisser » ou « pincer » et
**caractérisé en ce que** le dispositif de contrôle est configuré pour avoir une valeur seuil pour la zone de commande de type « glisser » ou « pincer » supérieure à la valeur seuil pour la zone de commande de type « appuyer ».

2. Interface homme machine selon la revendication 1, dans laquelle le pavé tactile capacitif comprend un réseau d'électrodes chargées électriquement, et le signal représentatif d'une commande de l'utilisateur au niveau dudit pavé tactile est lié à la perturbation du champ électrostatique généré par le réseau d'électrodes (50) lors d'une commande de l'utilisateur au niveau du pavé tactile.

3. Interface homme machine selon la revendication 2, dans laquelle l'amplitude du signal représentatif d'une commande de l'utilisateur au niveau dudit pavé tactile est proportionnelle à la capacitance mesurée entre chaque électrode du réseau d'électrodes et le moyen de commande de l'utilisateur lors d'une commande de l'utilisateur au niveau du pavé tactile.

4. Interface homme machine selon l'une des revendications 2 ou 3 , dans laquelle le dispositif de contrôle est configuré pour déterminer pour au moins une des zones de commande du pavé tactile la fonction à activer lorsque le niveau du signal reçu est supérieur ou égal à la valeur seuil correspondant à ladite zone en fonction du nombre d'électrodes du réseau d'électrodes du pavé tactile capacitif dont le niveau du signal est supérieur ou égal à ladite valeur seuil.

5. Interface homme machine selon la revendication 4 , dans laquelle le dispositif de retour haptique est configuré pour fournir un retour haptique différent en fonction du nombre d'électrodes du réseau d'électrodes du pavé tactile capacitif dont le niveau du signal est supérieur ou égal à ladite valeur seuil.

6. Planche de bord d'un véhicule automobile comprenant une interface homme machine selon l'une des revendications précédentes.

## Patentansprüche

1. Mensch-Maschine-Schnittstelle (10), die es ermöglicht, mindestens zwei Funktionen eines Kraftfahrzeugs zu steuern, wobei die Mensch-Maschine-Schnittstelle enthält:
- ein kapazitives Touchpad (20), das mindestens zwei Steuerzonen (21, 22, 23) enthält, wobei jede Steuerzone konfiguriert ist, eine Steuerung mindestens einer Funktion zu empfangen,
- eine haptische Rückmeldevorrichtung (40), die konfiguriert ist, bei der Berücksichtigung der Steuerung eine Rückmeldung an den Benutzer der Mensch-Maschine-Schnittstelle zu liefern,
- eine Kontrollvorrichtung (30), die konfiguriert ist, vom Touchpad ein für eine Steuerung des Benutzers im Bereich des Touchpads repräsentatives Signal zu empfangen und die Steuerung zu berücksichtigen, wenn der Pegel des empfangenen Signals höher als ein oder gleich einem Schwellwert ist,
wobei die Kontrollvorrichtung konfiguriert ist, für mindestens zwei der Steuerzonen des Touchpads unterschiedliche Schwellwerte zu enthalten, und die haptische Rückmeldevorrichtung konfiguriert ist, abhängig von der vom Benutzer benutzten Steuerzone des Touchpads eine unterschiedliche haptische Wirkung zu liefern, und mindestens eine der zwei Steuerzonen des Touchpads eine Steuerzone des Typs "tippen" ist, die konfiguriert ist, eine Steuerung des Typs "tippen" zu empfangen, und mindestens eine der zwei Steuerzonen des Touchpads eine Steuerzone des Typs "wischen" oder "zoomen" ist, die konfiguriert ist, eine Steuerung des Typs "wischen" oder "zoomen" zu empfangen, und
**dadurch gekennzeichnet, dass** die Kontrollvorrichtung konfiguriert ist, einen Schwellwert für die Steuerzone "wischen" oder "zoomen" zu haben, der höher ist als der Schwellwert für die Steuerzone des Typs "tippen".

2. Mensch-Maschine-Schnittstelle nach Anspruch 1, wobei das kapazitive Touchpad ein Netz elektrisch geladener Elektroden enthält, und das für eine Steuerung des Benutzers im Bereich des Touchpads repräsentative Signal mit der Störung des elektrostatischen Felds verbunden ist, das vom Elektrodennetz (50) bei einer Steuerung des Benutzers im Bereich des Touchpads erzeugt wird.

3. Mensch-Maschine-Schnittstelle nach Anspruch 2, wobei die Amplitude des für eine Steuerung des Benutzers im Bereich des Touchpads repräsentativen Signals proportional zu der Kapazität ist, die zwischen jeder Elektrode des Elektrodennetzes und der Steuervorrichtung des Benutzers bei einer Steuerung des Benutzers im Bereich des Touchpads gemessen wird.

4. Mensch-Maschine-Schnittstelle nach einem der Ansprüche 2 oder 3, wobei die Kontrollvorrichtung konfiguriert ist, für mindestens eine der Steuerzonen des Touchpads die Funktion zu bestimmen, die zu aktivieren ist, wenn der Pegel des empfangenen Signals höher als der oder gleich dem der Zone entsprechenden Schwellwert ist, abhängig von der Anzahl von Elektroden des Elektrodennetzes des kapazitiven Touchpads, deren Signalpegel höher als der oder gleich dem Schwellwert ist.

5. Mensch-Maschine-Schnittstelle nach Anspruch 4, wobei die haptische Rückmeldevorrichtung konfiguriert ist, abhängig von der Anzahl von Elektroden des Elektrodennetzes des kapazitiven Touchpads, deren Signalpegel höher als der oder gleich dem Schwellwert ist, eine unterschiedliche haptische Rückmeldung zu liefern.

6. Armaturenbrett eines Kraftfahrzeugs, das eine Mensch-Maschine-Schnittstelle nach einem der vorhergehenden Ansprüche enthält.

## Claims

1. Human/machine interface (10) making it possible to control at least two functions of a motor vehicle, the human/machine interface comprising:
- a capacitive touch pad (20) comprising at least two control zones (21, 22, 23), each control zone being configured to receive a command for at least one function,
- a haptic feedback device (40) configured to provide feedback to the user of the human/machine interface on recognition of the command,
- a control device (30) configured to receive from the touch pad a signal representative of a command from the user on said touch pad and to recognize said command when the level of the signal received is greater than or equal to a threshold value,
the control device being configured to comprise different threshold values for at least two of the control zones of the touch pad and the haptic feedback device being configured to provide a different haptic effect as a function of the control zone of the touch pad used by the user and at least one of the two control zones of the touch pad being a control zone of "push" type configured to receive a "push" type command and at least one of the two control zones of the touch pad being a control zone of "slide" or "pinch" type configured to receive a "slide" or "pinch" type command and **characterized in that** the control device is configured to have a threshold value for the control zone of "slide" or "pinch" type greater than the threshold value for the control zone of "push" type.

2. Human/machine interface according to Claim 1, in which the capacitive touch pad comprises an array of electrically charged electrodes and the signal representative of a command from the user on said touch pad is linked to the disturbance of the electrostatic field generated by the array of electrodes (50) upon a command from the user on the touch pad.

3. Human/machine interface according to Claim 2, in which the amplitude of the signal representative of a command from the user on said touch pad is proportional to the capacitance measured between each electrode of the array of electrodes and the control means of the user upon a command from the user on the touch pad.

4. Human/machine interface according to one of Claims 2 and 3, in which the control device is configured to determine, for at least one of the control zones of the touch pad, the function to be activated when the level of the signal received is greater than or equal to the threshold value corresponding to said zone as a function of the number of electrodes of the array of electrodes of the capacitive touch pad for which the level of the signal is greater than or equal to said threshold value.

5. Human/machine interface according to Claim 4, in which the haptic feedback device is configured to provide a different haptic feedback as a function of the number of electrodes of the array of electrodes of the capacitive touch pad for which the level of the signal is greater than or equal to said threshold value.

6. Dashboard of a motor vehicle comprising a human/machine interface according to one of the preceding claims.
